# EUROPEAN PATENT APPLICATION

(11) **EP 4 682 867 A1**
(43) Date of publication of application: **21.01.2026**
(21) Application number: 24787921.6
(22) Date of filing: 28.03.2024
(51) Int. Cl.: G10L 15/22, B60R 16/037

(54) **DATA PROCESSING METHOD AND RELATED DEVICE**

(30) Priority: 13.04.2023 CN 202310433422
(71) Applicant: Shenzhen Yinwang Intelligent Technologies Co., Ltd., Shenzhen, Guangdong 518110 (CN)
(72) Inventor: ZHOU, Yu, Shenzhen, Guangdong 518129 (CN); SU, Qi, Shenzhen, Guangdong 518129 (CN); NIE, Weiran, Shenzhen, Guangdong 518129 (CN)
(74) Representative: Thun, Clemens
(86) International application number: PCT/CN2024/084281
(87) International publication number: WO 2024/212815

(57) **Abstract**

A data processing method and a related device are provided, to reduce computing resource occupation in multi-sound zone interaction. The method includes: obtaining a plurality of pieces of audio, where the plurality of pieces of audio come from a plurality of sound zones (S501); obtaining user information of the plurality of sound zones, where the user information indicates whether a user exists in the sound zone (S502); and processing the plurality of pieces of audio based on the user information of the plurality of sound zones (S503).

## Description

This application claims priority to Chinese Patent Application No. 202310433422.7, filed with the China National Intellectual Property Administration on April 13, 2023 and entitled "DATA PROCESSING METHOD AND RELATED DEVICE", which is incorporated herein by reference in its entirety.

### TECHNICAL FIELD

This application relates to the field of human-machine interaction technologies, and in particular, to a data processing method and a related device.

### BACKGROUND

With development of artificial intelligence, application of artificial intelligence technologies becomes increasingly widespread. Voice interaction functions, such as voice question and answer, machine translation, and voice control, based on the artificial intelligence technologies bring great convenience in scenarios such as learning, life, and work of a user.

Application of voice interaction in an intelligent electric vehicle is used as an example. In recent years, the intelligent electric vehicle industry has developed rapidly, and a quantity of intelligent vehicles in use has continued to grow. As an important part of the intelligent vehicle, an intelligent cabin is a main focus of intelligentization of vehicles. The intelligent vehicle may recognize semantics in a voice made by a passenger in a specific sound zone, and make a corresponding reply or perform a corresponding operation based on the semantics, for example, opening/closing a vehicle window, turning on/off multimedia, adjusting a temperature, and positioning and navigation, to improve safety and entertainment of driving.

However, an enhanced intelligent cabin experience brings an increasing challenge to limited computing resources of an in-vehicle infotainment. When the computing resource occupied by the in-vehicle infotainment exceeds a warning threshold or a temperature of the in-vehicle infotainment exceeds a critical value under high-load conditions, a protection mechanism is triggered, so that use of some functions with high load is limited to reduce the load. This includes limiting multi-sound zone voice interaction, namely, one of basic experiences of the intelligent cabin. Voice interaction functionality is limited due to issues such as voice wake-up delays, recognition lagging, or even complete failure.

### SUMMARY

This application provides a data processing method and a related device, to resolve a problem of excessive computing resource occupation in multi-sound zone voice interaction.

According to a first aspect, a data processing method is provided. The method may be applied to multi-sound zone voice interaction in a transportation means, game, intelligent cinema, smart home, or intelligent security protection scenario. The method may be implemented by a transportation means or a chip in a transportation means, or may be implemented by a computer, an intelligent terminal device, or an intelligent appliance, or a chip in a computer, an intelligent terminal device, or an intelligent appliance, or the like. The method includes: obtaining a plurality of pieces of audio and user information of a plurality of sound zones, where the plurality of pieces of audio come from the plurality of sound zones, and the user information indicates whether a user exists in the sound zone; and processing the plurality of pieces of audio based on the user information of the plurality of sound zones. For example, at least one microphone is disposed in each sound zone, and the plurality of pieces of audio are captured by microphones in the plurality of sound zones. The user information about whether a user exists in the plurality of sound zones is obtained, and the plurality of pieces of audio data from the plurality of sound zones are processed based on the user information, so that a sound zone whose audio data is to be processed can be obtained through screening based on whether a user exists in the sound zone. This reduces a quantity of pieces of audio data to be processed, to reduce computing resources required for audio processing.

In a possible implementation, processing the plurality of pieces of audio based on the user information of the plurality of sound zones includes: processing a part of audio obtained through screening from the plurality of pieces of audio based on the user information of the plurality of sound zones. In this way, a quantity of pieces of audio that need to be processed can be reduced, so that computing resource occupation is reduced, to ensure normal use of a multi-sound zone voice interaction function.

In a possible implementation, processing the plurality of pieces of audio based on the user information of the plurality of sound zones includes: processing, based on the user information of the plurality of sound zones, audio of a sound zone in which the user exists in the plurality of pieces of audio. The audio of the sound zone in which the user exists is processed. When a quantity of sound zones in which users exist is less than a quantity of all sound zones, a quantity of pieces of audio that need to be processed can be reduced. In addition, because a distance between a microphone and the user that are in a same sound zone is short, the audio captured by the microphone in the sound zone in which the user exists has a high signal-to-noise ratio, so that accuracy of speech recognition can be ensured when a quantity of pieces of audio to be processed is reduced.

In a possible implementation, processing the plurality of pieces of audio based on the user information of the plurality of sound zones includes: discarding, based on the user information of the plurality of sound zones, audio of a sound zone in which no user exists in the plurality of pieces of audio. In this way, the audio of the sound zone in which no user exists is discarded, so that a quantity of pieces of audio that need to be processed can be reduced, to reduce computing resources occupied by multi-sound zone voice interaction. In addition, some storage resources can be released, to reduce storage resource occupation.

In a possible implementation, processing the plurality of pieces of audio based on the user information of the plurality of sound zones includes: processing, based on the user information of the plurality of sound zones, audio of a sound zone in which the user exists and audio of a part of a sound zone in which no user exists in the plurality of pieces of audio. In this way, accuracy of speech recognition can be further improved when a quantity of pieces of audio that need to be processed is reduced.

In a possible implementation, the method further includes: obtaining a computing resource usage; and when the computing resource usage is greater than a threshold, processing the plurality of pieces of audio based on the user information of the plurality of sound zones includes: processing, based on the user information of the plurality of sound zones, audio of a part of a sound zone in which the user exists. When the computing resource usage is high, the audio of the part of the sound zone in which the user exists is processed, so that a quantity of pieces of audio that need to be processed can be further reduced, to further reduce computing resource occupation of audio processing.

In a possible implementation, processing the audio of the part of the sound zone in which the user exists includes: processing audio of a sound zone in which the user exists in a target sound zone, where the target sound zone is a part of the plurality of sound zones. A quantity of sound zones in the target sound zone is less than a quantity of all sound zones, so that a quantity of pieces of audio that need to be processed is reduced, to reduce computing resources required for audio processing.

Optionally, the plurality of sound zones are zones corresponding to a plurality of seats in a cabin of a vehicle, and the target sound zone includes a driver zone and/or a front passenger zone in the zones corresponding to the plurality of seats. When computing resource load is high, only the audio of a driver cabin and/or a front passenger cabin is processed, so that a quantity of pieces of audio that need to be processed can be further reduced, to further reduce computing resources required for voice interaction. This ensures normal use of voice interaction of a driver seat and a front passenger seat when the computing resource load is high.

In a possible implementation, processing the audio of the part of the sound zone in which the user exists includes: processing audio of at least one sound zone with a highest priority in the sound zone in which the user exists. When computing resources are insufficient, the audio of the sound zone with a high priority is preferentially processed, to ensure normal implementation of a voice interaction function of the sound zone with a high priority when a quantity of pieces of audio to be processed is reduced and computing resource load is reduced.

In a possible implementation, the plurality of sound zones are zones corresponding to the plurality of seats in the cabin of the vehicle, and one sound zone includes zones corresponding to one or more seats.

According to a second aspect, an apparatus is provided. The apparatus includes an obtaining module and a processing module. The obtaining module is configured to obtain a plurality of pieces of audio, where the plurality of pieces of audio come from a plurality of sound zones. The obtaining module is configured to obtain user information of the plurality of sound zones, where the user information indicates whether a user exists in the sound zone. The processing module is configured to process the plurality of pieces of audio based on the user information of the plurality of sound zones.

In a possible implementation, the processing module is specifically configured to process a part of audio obtained through screening from the plurality of pieces of audio based on the user information of the plurality of sound zones.

In a possible implementation, the processing module is specifically configured to process, based on the user information of the plurality of sound zones, audio of a sound zone in which the user exists.

In a possible implementation, the processing module is specifically configured to discard, based on the user information of the plurality of sound zones, audio of a sound zone in which no user exists.

In a possible implementation, the processing module is specifically configured to process, based on the user information of the plurality of sound zones, audio of a sound zone in which the user exists and audio of a part of a sound zone in which no user exists in the plurality of pieces of audio.

In a possible implementation, the processing module is specifically configured to determine that the user exists in a target sound zone in the plurality of sound zones based on the user information of the plurality of sound zones. The processing module is specifically configured to process the audio of the target sound zone.

In a possible implementation, the obtaining module is configured to obtain a computing resource usage. The processing module is specifically configured to: when the computing resource usage is greater than a threshold, process, based on the user information of the plurality of sound zones, audio of a part of a sound zone in which the user exists.

In a possible implementation, the processing module is specifically configured to process audio of a sound zone in which the user exists in a target sound zone, where the target sound zone is a part of the plurality of sound zones.

In a possible implementation, the plurality of sound zones are zones corresponding to a plurality of seats in a cabin of a vehicle, and the target sound zone includes a driver zone and/or a front passenger zone in the zones corresponding to the plurality of seats.

In a possible implementation, the plurality of sound zones have priorities; and the processing module is specifically configured to process audio of at least one sound zone with a highest priority in the sound zone in which the user exists.

According to a third aspect, a device is provided. The device includes a processor and a memory. The processor is coupled to the memory, and the processor is configured to implement, based on instructions stored in the memory, the data processing method according to the first aspect or any one of the possible implementations of the first aspect.

According to a fourth aspect, a computer-readable storage medium is provided. The computer-readable storage medium includes instructions, and when the computer-readable storage medium is run on a computer, the computer is enabled to perform the data processing method according to the first aspect or any one of the possible implementations of the first aspect.

According to a fifth aspect, a computer program product including instructions is provided. When the instructions are run by an electronic device, the electronic device is enabled to perform the data processing method according to the first aspect or any one of the possible implementations of the first aspect.

### BRIEF DESCRIPTION OF DRAWINGS

FIG. 1 is a functional block diagram of a vehicle according to this application;
FIG. 2a is a diagram of sound zone division in a vehicle according to this application;
FIG. 2b is another diagram of sound zone division in a vehicle according to this application;
FIG. 3a is a diagram of a system architecture according to this application;
FIG. 3b is a diagram of another system architecture according to this application;
FIG. 4a is a diagram of a scenario in which modules in a system collaboratively process a plurality of pieces of audio according to this application;
FIG. 4b is a diagram of another scenario in which modules in a system collaboratively process a plurality of pieces of audio according to this application;
FIG. 4c is a diagram of still another scenario in which modules in a system collaboratively process a plurality of pieces of audio according to this application;
FIG. 5 is a schematic flowchart of an audio processing method according to this application;
FIG. 6 is a diagram of a structure of an apparatus according to this application; and
FIG. 7 is a diagram of a structure of a device according to this application.

### DESCRIPTION OF EMBODIMENTS

This application provides a data processing method and a related device, to reduce computing resources occupied by multi-sound zone voice interaction.

In this application, "at least one" means one or more, and "a plurality of" means two or more. The term "and/or" describes an association relationship between associated objects and represents that three relationships exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural. In addition, in embodiments of this application, terms such as "first" and "second" do not limit a quantity or an execution sequence.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

With rapid development of voice processing technologies, a rate and accuracy of voice processing are increasingly high, and the voice processing technologies are applied to more electronic products, so that the electronic products are more intelligent. The voice processing technologies generally include voice preprocessing, speech recognition, and the like. Voice preprocessing is mainly to perform processing such as noise reduction and gaining on audio, and speech recognition is mainly to recognize semantic information carried in preprocessed audio, so that an electronic device can make a corresponding response based on the semantic information. Currently, an electronic device having a voice processing function includes, for example, an intelligent terminal device such as a smartphone, a smart watch, a smart speaker, a tablet computer, or a notebook computer, further includes, for example, an intelligent appliance such as a smart refrigerator, a smart television, or a floor sweeping robot, and further includes, for example, an intelligent moving carrier such as a car, a truck, a motorcycle, a bus, a ship, or an airplane. A user may interact with the electronic device having a voice processing function through a voice. For example, the user may communicate with the electronic device through a voice without manually inputting a text. For another example, the user may control turning on, turning off, a running status, a mode, and the like of the electronic device through a voice without a manual operation. This greatly facilitates work and life of the user.

To further improve accuracy of speech recognition, for some complex or large voice capturing environments, for example, a sitting zone inside a moving carrier, or an indoor environment, an environment is divided into a plurality of sound zones. At least one microphone is deployed in each sound zone, so that voices made by users at different positions in the environment can be clearly captured by a microphone in at least one sound zone. In this way, audio captured by the microphone has a high signal-to-noise ratio, so that accuracy of speech recognition performed on the audio is improved. Multi-sound zone voice interaction means that, in a scenario in which the environment is divided into the plurality of sound zones, microphones of the plurality of sound zones capture audio, and an apparatus having a multi-sound zone voice processing function performs processing such as voice preprocessing and speech recognition on the audio of the plurality of sound zones, and makes a corresponding response. Multi-sound zone voice interaction can ensure that the voices made by the users in the different positions can be responded to. However, in multi-sound zone voice interaction, the electronic device needs to simultaneously process audio of the plurality of sound zones, and a large quantity of computing resources and memory resources are occupied. When computing resources and memory resources of a voice processing apparatus are limited, or load of the voice processing apparatus is high, timeliness and accuracy of voice processing are affected.

A vehicle is used as an example of a transportation means. As intelligence and networking of vehicles improve, vehicle cabins gradually develop toward intelligent cabins with human-machine interaction as a core, and intelligent voice control in the vehicle cabins becomes a mainstream requirement of current intelligent cabins. A plurality of microphones may be disposed in the vehicle cabin. The vehicle may capture a voice signal in an environment by using the plurality of microphones, and recognize a voice instruction in the voice signal, to perform an operation corresponding to the voice instruction. An intelligent cabin mainly meets driving and entertainment requirements of an occupant, and an in-vehicle infotainment needs to process a large amount of driving information and user information, which brings more challenges to limited computing resources of the in-vehicle infotainment. Currently, in a multi-sound zone (such as four-sound zone, five-sound zone, or six-sound zone) voice interaction solution of an intelligent cabin, a quantity of audio streams that need to be processed and decoded in real time during audio preprocessing, voice wake-up, sound source positioning, and speech recognition, and a quantity of concurrent related algorithm models are proportional to a quantity of sound zones. For example, if the vehicle includes four sound zones, audio of the four sound zones needs to be processed simultaneously, and if the vehicle includes six sound zones, audio of the six sound zones needs to be processed simultaneously, resulting in excessive computing resource occupation in entire voice interaction. As a consequence, multi-sound zone interaction becomes one of basic factors that trigger high load of the in-vehicle infotainment. When computing resource occupied by the in-vehicle infotainment exceeds a warning threshold or a temperature of the in-vehicle infotainment exceeds a critical value under high-load conditions, a protection mechanism is triggered, so that use of some functions with high load is limited to reduce the load. This includes limiting multi-sound zone voice interaction of the intelligent cabin. A user's driving experience is greatly compromised due to issues such as voice wake-up delays, recognition lagging, or even complete failure. This greatly reduces driving experience of a user.

To resolve the foregoing technical problem, this application provides the following embodiments, to reduce computing resource occupation in multi-sound zone voice interaction, thereby ensuring normal implementation of an intelligent function including voice interaction.

The solutions provided in this application are applicable to multi-sound zone voice interaction in a transportation means scenario, and may be further applicable to multi-sound zone voice interaction in a game, intelligent cinema, smart home, or intelligent security protection scenario. In this application, user information of a plurality of sound zones is obtained, where the user information indicates whether the user exists in a corresponding sound zone, and then audio of a part of the plurality of sound zones is processed based on the user information, to reduce a quantity of pieces of audio that need to be processed. This reduces computing resources that need to be occupied for audio processing, to ensure normal running of voice interaction. In addition, the quantity of pieces of audio that need to be processed is small, so that voice processing efficiency can be improved to a specific extent, to improve a response speed of voice interaction.

The following uses multi-sound zone voice interaction in a vehicle scenario as an example for description. It may be understood that the solution provided in this application may also be applicable to another scenario. In other words, a problem of excessive computing resource occupation in multi-sound zone interaction may also be resolved in another scenario based on a same principle. Architectures and service scenarios described in this application are intended to describe the technical solutions in embodiments of this application more clearly, and do not constitute a limitation on the technical solutions provided in this application. A person of ordinary skill in the art may know that with evolution of network architectures and emergence of new service scenarios, the technical solutions provided in this application are also applicable to similar technical problems.

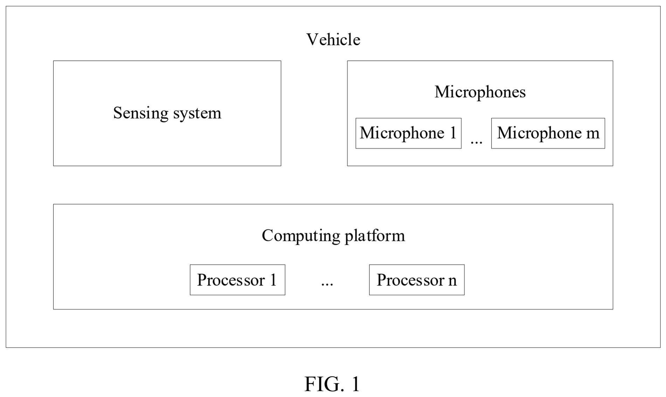

FIG. 1 is a functional block diagram of a vehicle according to this application. The vehicle may include a plurality of microphones, a sensing system, and a computing platform.

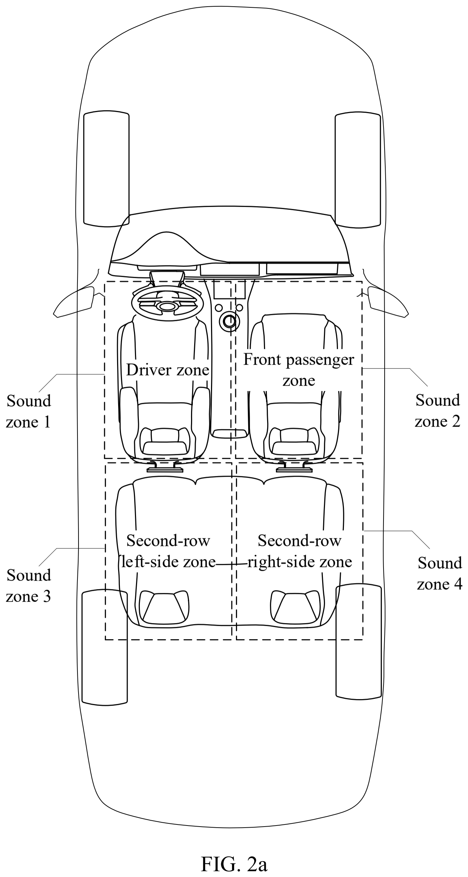

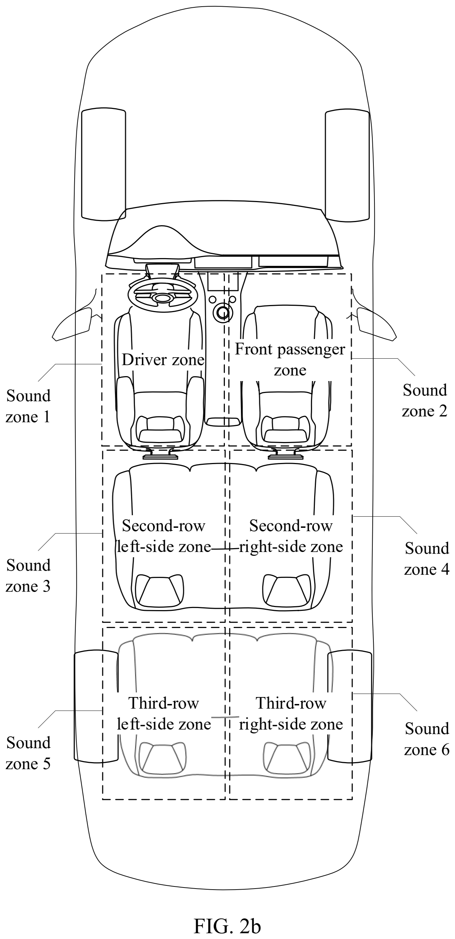

Internal space (cabin) of the vehicle may be divided into a plurality of sound zones, and at least one microphone, for example, a microphone 1 to a microphone m (where m is a positive integer greater than or equal to 2), is disposed in each sound zone. For example, as shown in FIG. 2a, an interior of the vehicle may be divided into four sound zones: a driver zone, a front passenger zone, a second-row left-side zone, and a second-row right-side zone. In this case, microphones may be respectively disposed in the driver zone, the front passenger zone, the second-row left-side zone, and the second-row right-side zone. For another example, as shown in FIG. 2b, for a sport utility vehicle (sport utility vehicle, SUV), an internal zone in which users sit may be divided into six sound zones: a driver zone, a front passenger zone, a second-row left-side zone, a second-row right-side zone, a third-row left-side zone, and a third-row right-side zone. In this case, microphones may be respectively disposed in the driver zone, the front passenger zone, the second-row left-side zone, the second-row right-side zone, the third-row left-side zone, and the third-row right-side zone. Herein, division into the four sound zones and the six sound zones is merely used as an example. Based on a type, a model, an internal space size, a quantity of cabins, and the like of the vehicle, the interior of the vehicle may alternatively be divided into two sound zones, five sound zones, seven sound zones, or more sound zones. Examples are not enumerated herein one by one.

The sensing system is configured to: detect whether a user exists in each sound zone and obtain user information about whether a user exists in each sound zone, where the user information indicates whether a user exists in a corresponding sound zone.

The sensing system may include one or more sensors, and may determine, based on data captured by the sensors, a sound zone in which the user exists and a sound zone in which no user exists. In a possible implementation, the sensing system includes, for example, a camera apparatus (an image sensor). The camera apparatus may capture an image of the interior of the vehicle, and analyze the image to determine whether a user exists in each sound zone. In another possible implementation, the sensing system includes, for example, a pressure sensor. The pressure sensor may be disposed on a seat of each sound zone. When a user sits on the seat, the pressure sensor may sense pressure, and convert a pressure signal into an electrical signal, so that whether a user exists in a corresponding sound zone can be determined based on the electrical signal. In another possible implementation, the sensing system may include a ranging sensor, at least one ranging sensor is disposed in each sound zone, and whether a user sits on a seat is determined through ranging. The sensing system may include one or more of the foregoing sensors. When the sensing system includes a plurality of sensors, it may be comprehensively determined, with reference to data captured by the plurality of sensors, whether a user exists in a corresponding sound zone, to improve accuracy of the obtained user information of the sound zone. Certainly, the sensing system may further include another sensor configured to detect whether a user exists in a sound zone, for example, a temperature sensor or an infrared sensor. This is not limited herein. In still another possible implementation, the sensing system may include a graphical user interface (graphical user interface, GUI). The GUI may be displayed on a central display screen of the vehicle or a terminal device of a user. The GUI displays each sound zone to the user, and the user specifies, through a voice, a touch, or the like, a sound zone in which a user exists.

The microphone is an acoustic sensor, and a function of the microphone is to capture a voice in an environment and convert the voice into audio in an electronic signal form. A device that can capture a voice and convert the captured voice into an electronic signal is included in a range of the microphone defined in this application. A specific implementation of the microphone device is not limited in this embodiment of this application. In addition to collecting a voice made by a sound source in a sound zone to which the microphone belongs, the microphone may further capture a voice made by a sound source in another sound zone. Generally, a microphone located in a same sound zone as a user is close to the user. In other words, a distance between the microphone and a sound source is short. Therefore, audio that is of the user located in the same sound zone and that is captured by the microphone has a higher signal-to-noise ratio.

A multi-sound zone voice interaction function of the vehicle may be controlled by the computing platform. The computing platform may include one or more processors, for example, a processor 1 to a processor n (where n is a positive integer). The processor is a circuit having a signal processing capability. In an implementation, the processor may be a circuit having an instruction reading and running capability, for example, may be a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform may further include a memory. The memory is configured to store instructions. Some or all of the processor 1 to processor n may invoke the instructions in the memory to execute the instructions, to implement a corresponding function.

The user information that is of each sound zone and that is obtained by the sensing system may be input to the computing platform, and the audio captured by the plurality of microphones is also input to the computing platform, so that the computing platform may process audio of a part of the plurality of sound zones based on the user information of each sound zone. Processing the audio of the part of the plurality of sound zones may include any one of the following cases: 1. processing audio captured by a microphone in the sound zone in which the user exists; 2. processing audio captured by a microphone in the sound zone in which the user exists, and audio captured by a microphone in a part of the sound zone in which no user exists, for example, a sound zone in which no user exists and that is adjacent to the sound zone in which the user exists; or 3. processing audio of a part of the sound zone in which the user exists, for example, processing audio of a sound zone in which the user exists in a target sound zone, where the target sound zone is a part of the plurality of sound zones, for example, the target sound zone includes the driver zone and/or the front passenger zone; or processing audio of at least one sound zone with a highest priority in the sound zone in which the user exists. In this way, the audio of the part of the plurality of sound zones is processed based on the user information, so that a quantity of pieces of audio that need to be processed can be reduced, to reduce occupation of computing resources of the computing platform.

Audio processing performed by the computing platform includes audio preprocessing and audio back-end processing. Audio preprocessing includes at least one of endpoint detection, amplification, filtering, noise reduction, echo cancellation, crosstalk cancellation, and the like, to reduce interference of an environmental noise, an echo, a reverberation sound, and the like in audio. In this way, a signal-to-noise ratio of the audio is improved, to obtain a purer human voice, and improve accuracy of subsequent speech recognition. Endpoint detection is to divide audio into a speech segment and a non-speech segment, and subsequently, processing such as noise reduction and speech recognition may be performed on the speech segment, so that an amount of data that needs to be processed can be reduced, and processing efficiency can be improved. Noise estimation is performed by using the non-speech segment, to perform noise suppression, so that speech enhancement effect is implemented. Amplification is to increase audio signal strength. Processing such as filtering, noise reduction, echo cancellation, and crosstalk cancellation is to suppress interference of an environmental noise, sound of initial reflection, sound of a plurality of reflection times, and the like in audio, to enhance a human voice signal.

Audio back-end processing includes performing at least one of human voice detection, wake-up word recognition, sound source positioning, sound zone positioning, speech recognition, and the like on audio obtained through audio preprocessing, to recognize semantics of a voice in the audio and determine a position of a sound source. Human voice detection is to determine whether a human voice exists in audio. Wake-up word recognition is to recognize a keyword in audio, for example, "Hello", "Hey Celia", or "Hey, X". After it is determined through recognition that the audio includes a wake-up word, a speech recognition function is activated. Certainly, wake-up word recognition is optional. In a possible implementation, speech recognition may be directly performed without wake-up word recognition. For example, an instruction, for example, "start navigation", "open a vehicle window", "turn up/down a volume", or "turn up/down a temperature", in a user voice may be directly recognized without wake-up word recognition. Sound zone positioning and sound source positioning are to determine a sound zone (position) in which a user who makes a voice is located, to pertinently perform a corresponding operation on the sound zone, or determine whether the corresponding sound zone has corresponding permission. Speech recognition, also referred to as automatic speech recognition (automatic speech recognition, ASR), aims to convert lexical text in a human voice into a computer-readable input, such as a keystroke, binary code, or a character sequence.

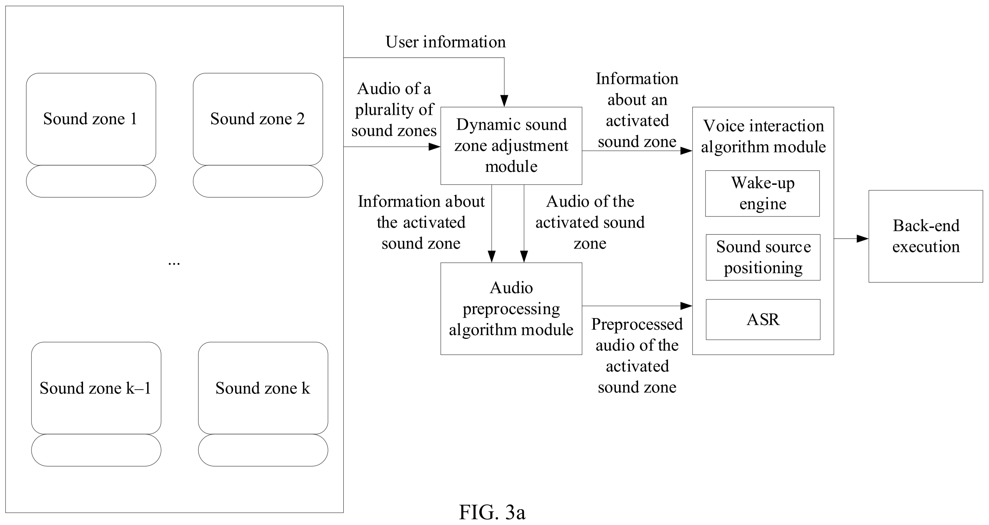

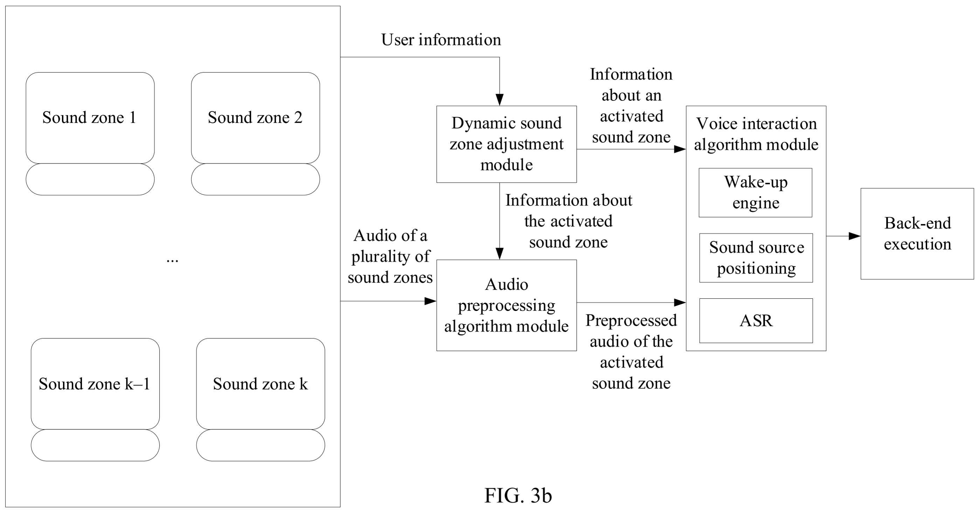

FIG. 3a is a diagram of a system architecture according to this application. FIG. 3b is a diagram of another system architecture according to this application. As shown in FIG. 3a and FIG. 3b, the system architecture includes a framework that mainly includes a plurality of microphones that are deployed in a distributed manner, a dynamic sound zone adjustment module, an audio preprocessing algorithm module, a voice interaction algorithm module, a back-end execution module, and the like. FIG. 3a is different from FIG. 3b in that, in FIG. 3a, in addition to obtaining user information of a plurality of sound zones, the dynamic sound zone adjustment module further obtains audio captured by microphones of the plurality of sound zones, the dynamic sound zone adjustment module determines, based on the user information of the plurality of sound zones, audio to be input to the audio preprocessing algorithm module in audio of the plurality of sound zones, and the audio preprocessing algorithm module processes the audio input by the dynamic sound zone adjustment module, and in FIG. 3b, the audio preprocessing algorithm module obtains the audio of the plurality of sound zones, the dynamic sound zone adjustment module obtains the user information of the plurality of sound zones and inputs the user information of the plurality of sound zones into the audio preprocessing algorithm module, and the audio preprocessing algorithm module determines, based on the user information of the plurality of sound zones, audio to be processed in a plurality of pieces of audio. Certainly, in another implementation, the local system architecture of the vehicle may not include the voice interaction algorithm module, and a function of the voice interaction algorithm module may be implemented by a cloud server. After audio is processed by using the audio preprocessing algorithm module, the vehicle uploads preprocessed audio to the cloud. After completing speech recognition, and the like, the cloud obtains a recognition result, and then sends the recognition result to the vehicle. The recognition result is executed by the back-end execution module of the vehicle. The following uses the system architecture shown in FIG. 3a as an example to describe functions of the modules. The system architecture in FIG. 3b is similar, and therefore details are not described again.

The plurality of microphones are respectively disposed in the sound zones, and are configured to capture audio of all the sound zones in real time.

The dynamic sound zone adjustment module receives audio data obtained through sound reception by the microphones of all sound zones. The dynamic sound zone adjustment module can further obtain the user information, that is, sense whether a person exists in a seat in each sound zone in the vehicle, and determine a quantity and positions of activated sound zones based on the user information. A decision result determines channels and a quantity of pieces of audio that need to be processed by the downstream audio preprocessing algorithm module and voice interaction algorithm module. The activated sound zone is a sound zone corresponding to audio to be processed subsequently, that is, audio of the activated sound zone in the plurality of sound zones is the audio to be processed in the plurality of pieces of audio. For example, if the activated sound zone includes a sound zone 1, a sound zone 2, and a sound zone 3, the audio that needs to be processed by the audio preprocessing algorithm module and the voice interaction algorithm module includes audio of the three sound zones: audio of the sound zone 1, audio of the sound zone 2, and audio of the sound zone 3. In this application, for brevity of description, audio captured by the microphone in the sound zone is usually referred to as audio of the sound zone for short.

In an implementation, the activated sound zone may be a sound zone in which a user exists. For example, as shown in FIG. 2b, in the sound zone 1 to the sound zone 6, it is assumed that users exist in the sound zone 1, the sound zone 2, and the sound zone 3, and no user exists in the sound zone 4, the sound zone 5, and the sound zone 6. In this case, activated sound zones are the sound zone 1, the sound zone 2, and the sound zone 3, and the audio to be processed subsequently by the audio preprocessing algorithm module and the voice interaction algorithm module is audio of the sound zone 1, the sound zone 2, and the sound zone 3. In another implementation, the activated sound zone may include a sound zone in which a user exists, and a part of a sound zone in which no user exists, for example, a sound zone adjacent to the sound zone in which the user exists. For example, in the sound zone 1 to the sound zone 6 shown in FIG. 2b, it is assumed that users exist in the sound zone 1, the sound zone 2, and the sound zone 3, no user exists in the sound zone 4, the sound zone 5, and the sound zone 6, the sound zone 4 is a sound zone adjacent to the sound zone 3, and there is no obstacle such as a seat blocking the sound zone 4 and the sound zone 3, and a voice that is captured by a microphone in the sound zone 4 and that is made by a user in the sound zone 3 also has a high signal-to-noise ratio and can improve a success rate of speech recognition. In this case, the activated sound zones may be the sound zone 1, the sound zone 2, the sound zone 3, and the sound zone 4, and the audio to be processed subsequently by the audio preprocessing algorithm module and the voice interaction algorithm module is audio of the sound zone 1, the sound zone 2, the sound zone 3, and the sound zone 4. In still another implementation, when a user exists in the target sound zone in the plurality of sound zones, the activated sound zone is the target sound zone. In a vehicle scenario, the target sound zone is, for example, a sound zone corresponding to a driver or a front passenger. For example, in the sound zone 1 to the sound zone 6 shown in FIG. 2b, it is assumed that users exist in the sound zone 1, the sound zone 2, and the sound zone 3, no user exists in the sound zone 4, the sound zone 5, and the sound zone 6, the target sound zones are the sound zone 1 and the sound zone 2, and the target sound zone has a high priority. In this case, the activated sound zones are the sound zone 1 and the sound zone 2. In this case, the activated sound zone does not include the sound zone 3. The audio to be processed subsequently by the audio preprocessing algorithm module and the voice interaction algorithm module is audio of the sound zone 1 and the sound zone 2. In this way, computing resource occupation of multi-sound zone voice interaction can be further reduced.

The audio preprocessing algorithm module preprocesses, based on the position of the activated sound zone provided by the dynamic sound zone adjustment module, the audio of the activated sound zone input by the dynamic sound zone adjustment module. The audio preprocessing includes at least one of endpoint detection, audio amplification, filtering, noise reduction, echo cancellation, crosstalk cancellation, and the like, to improve a signal-to-noise ratio of the audio received by the microphone corresponding to each sound zone, so that an audio quality requirement of subsequent voice interaction is met. An algorithm used for voice endpoint detection is, for example, a short-time energy method, a zero-crossing rate method, a cepstral coefficient method, and an augmented Gaussian mixture model. An algorithm used for noise reduction may be a least mean square (least mean square, LMS) algorithm, Wiener filtering, or the like. An algorithm used for echo cancellation is, for example, an LMS algorithm or a normalized least mean square (normalized least mean square, NLMS) algorithm. An algorithm used for reverberation cancellation is, for example, inverse filtering, a beamforming algorithm, and a deep learning model.

The voice interaction algorithm module is configured to perform audio back-end processing on the audio of the activated sound zone. Specifically, the voice interaction algorithm module decoding, based on the position of the activated sound zone provided by the dynamic sound zone adjustment module and an audio signal of the corresponding activated sound zone processed by the audio preprocessing algorithm module includes at least one of wake-up word recognition, sound source positioning, sound zone locking, speech recognition, and the like. Decoding is to perform statistical mode recognition on a feature vector of a voice of a user by using a trained "acoustic model" and "language model". A function of the voice interaction algorithm module is to parse a voice instruction intention of a speaker in the target sound zone and determine a sound zone in which a user who sends a corresponding voice instruction is located.

The back-end execution module performs a corresponding subsequent operation, for example, voice broadcast replying or vehicle control instruction execution, based on a decoding result of the voice interaction algorithm module.

Transmission of a signaling stream and a data stream exists between the dynamic sound zone adjustment module, the audio preprocessing algorithm module, and the voice interaction algorithm module. The data stream is audio that is of the activated sound zone and that is obtained through screening by the dynamic sound zone adjustment module from the audio of the plurality of sound zones based on the user information of the sound zone. The signaling stream is information about the activated sound zone. The dynamic sound zone adjustment module separately sends the information about the activated sound zone to the audio preprocessing algorithm module and the voice interaction algorithm module, so that the audio preprocessing algorithm module can determine, based on the information about the activated sound zone, audio of which sound zone is the audio input by the dynamic sound zone adjustment module separately, and the voice interaction algorithm module can determine, based on the user information of the plurality of sound zones, audio of which sound zone is the audio input and preprocessed by the voice preprocessing algorithm module. The microphones in different sound zones are disposed at different positions, and positions, distances, angles, and the like of the microphones relative to users are different. For some algorithms in the audio preprocessing algorithm module and the voice interaction algorithm module, used algorithms may vary with audio of the different sound zones. For example, when the audio preprocessing algorithm module performs noise reduction on the audio of the different sound zones, some parameters of a used noise reduction algorithm may be different. The audio preprocessing algorithm module and the voice interaction algorithm module can accurately determine, based on the information about the activated sound zone provided by the dynamic sound zone adjustment module, audio of which sound zone is the input audio, to accurately select a corresponding algorithm used for processing the audio. In addition, for some algorithms, for example, algorithms such as an echo cancellation algorithm, a crosstalk cancellation algorithm, and a sound source positioning algorithm, calculation needs to be performed with reference to audio of a plurality of channels. A quantity of microphones, and distances and relative positions between the microphones affect these algorithms. The audio preprocessing algorithm module and the voice interaction algorithm module can accurately determine, based on the information about the activated sound zone provided by the dynamic sound zone adjustment module, audio of which sound zone is the input audio, to perform corresponding algorithm adjustment, for example, adjustment of a quantity of concurrent wake-up engines and a quantity of ASR engines, and adjustment of a quantity of audio channels processed by the sound source positioning algorithm.

If the user information changes, for example, when a user in a sound zone in which a user originally exists leaves, or a user enters a sound zone in which no user originally exists, after sensing a change of the user information, the dynamic sound zone adjustment module may send latest information about the activated sound zone to the preprocessing algorithm module and the voice interaction algorithm module in a timely manner, so that the preprocessing algorithm module and the voice interaction algorithm module can adjust a corresponding algorithm in a timely manner. This ensures a speech recognition success rate.

To make the solution of this embodiment easier to understand, the following provides descriptions with reference to specific scenarios. It may be understood that the following scenarios are merely used as examples, and should not be construed as a limitation on this application.

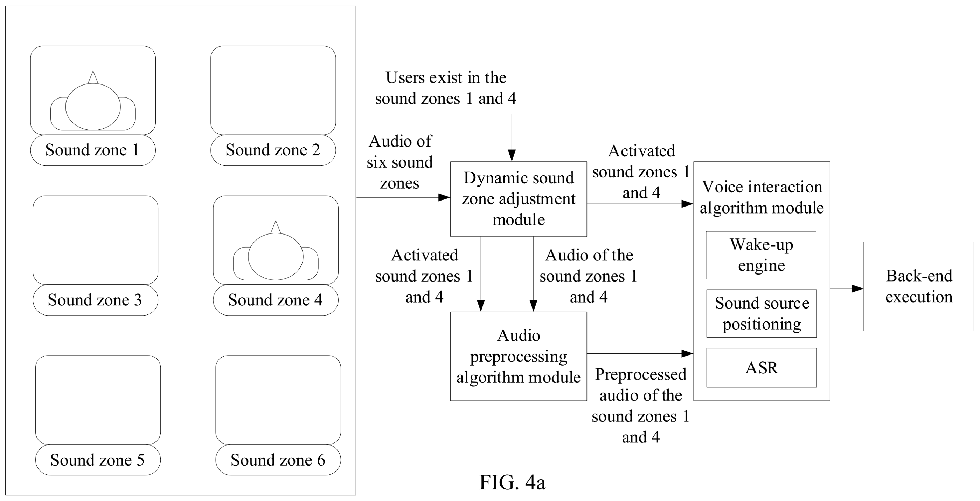

As shown in FIG. 4a, an example in which the activated sound zone is a sound zone in which a user exists, and users exist in a sound zone 1 and a sound zone 4 is used for description. In this scenario, the dynamic sound zone adjustment module senses that users exist in the sound zone 1 and the sound zone 4, notifies the audio preprocessing algorithm module and the voice interaction algorithm module that activated sound zones are the sound zone 1 and the sound zone 4, and sends only audio of the sound zone 1 and the sound zone 4 in the sound zone 1 to a sound zone 6 to the audio preprocessing module for processing. The audio preprocessing module receives audio signals of two channels and adaptively adjusts an algorithm based on information that the audio signals of the two channels are from the sound zone 1 and the sound zone 4. After preprocessing audio of the sound zone 1 and the sound zone 4, the audio preprocessing algorithm module sends preprocessed audio signals of the sound zone 1 and the sound zone 4 to the voice interaction algorithm module. The voice interaction algorithm module receives information about activation of the sound zone 1 and the sound zone 4 and preprocessed audio of the sound zone 1 and the sound zone 4, adaptively adjusts a quantity of concurrent wake-up engines and a quantity of concurrent ASR engines to 2, adaptively adjusts sound source positioning algorithm parsing audio channels to a channel 1 and a channel 4, and finally outputs a parsing result of a target sound zone for execution at the back end.

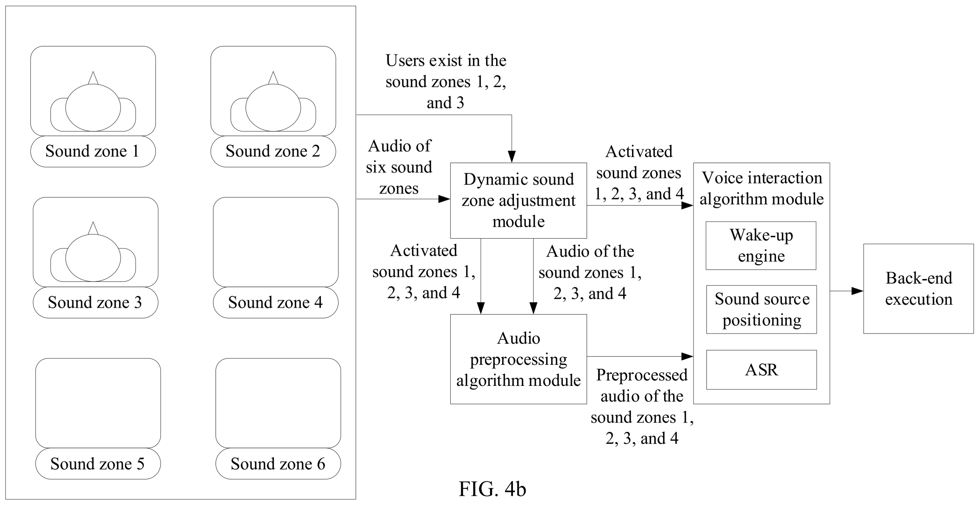

As shown in FIG. 4b, an example in which the activated sound zone includes a sound zone in which a user exists and a part of a sound zone in which no user exists, and users exist in the sound zone 1, the sound zone 2, and the sound zone 3 is used for description. In this scenario, the dynamic sound zone adjustment module senses that users exist in the sound zone 1, the sound zone 2, and the sound zone 3, determines that activated sound zones are the sound zone 1, the sound zone 2, the sound zone 3, and the sound zone 4, and notifies the audio preprocessing algorithm module and the voice interaction algorithm module that the activated sound zones are the sound zone 1, the sound zone 2, the sound zone 3, and the sound zone 4. In addition, only audio of the sound zone 1, the sound zone 2, the sound zone 3, and the sound zone 4 in the sound zone 1 to the sound zone 6 is sent to the audio preprocessing module for processing. The audio preprocessing module receives audio signals of four channels and adaptively adjusts an algorithm based on information that the audio signals of the four channels are from the sound zone 1, the sound zone 2, the sound zone 3, and the sound zone 4. After preprocessing audio of the sound zone 1, the sound zone 2, the sound zone 3, and the sound zone 4, the audio preprocessing algorithm module sends preprocessed audio signals of the sound zone 1, the sound zone 2, the sound zone 3, and the sound zone 4 to the voice interaction algorithm module. The voice interaction algorithm module receives information about activation of the sound zone 1, the sound zone 2, the sound zone 3, and the sound zone 4 and preprocessed audio of the sound zone 1, the sound zone 2, the sound zone 3, and the sound zone 4, adaptively adjusts a quantity of concurrent wake-up engines and a quantity of concurrent ASR engines to 4, adaptively adjusts sound source positioning algorithm parsing audio channels to the channel 1, the channel 2, a channel 3, and a channel 4, and finally outputs a parsing result of a target sound zone for execution at the back end.

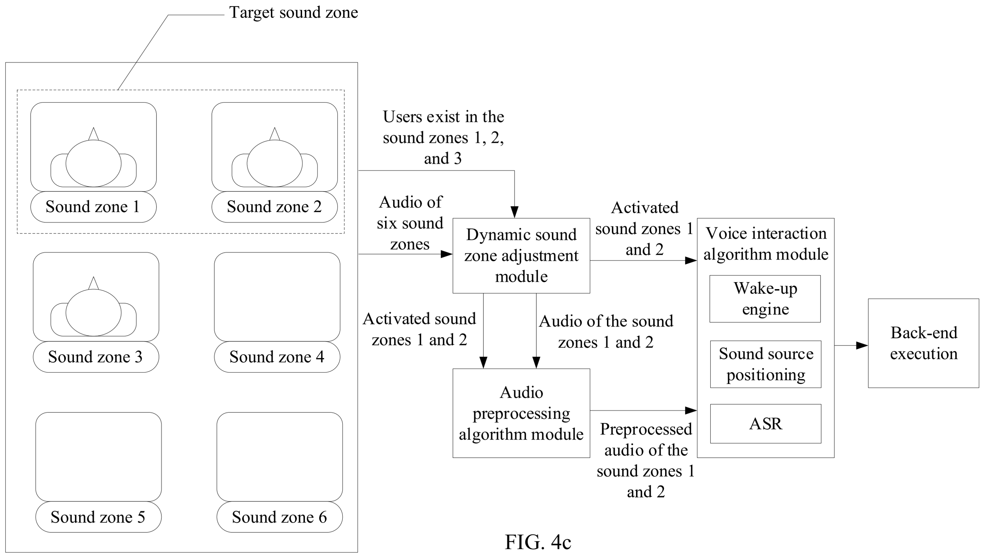

As shown in FIG. 4c, an example in which the activated sound zone is a sound zone in which a user exists in the target sound zone, and users exist in the sound zone 1, the sound zone 2, and the sound zone 3 is used for description. In this scenario, it is assumed that target sound zones are the sound zone 1 and the sound zone 2. The dynamic sound zone adjustment module senses that users exist in the sound zone 1, the sound zone 2, and the sound zone 3, determines that activated sound zones are the sound zone 1 and the sound zone 2, notifies the audio preprocessing algorithm module and the voice interaction algorithm module that the activated sound zones are the sound zone 1 and the sound zone 2, and sends only audio of the sound zone 1 and the sound zone 2 in the sound zone 1 to the sound zone 6 to the audio preprocessing module for processing. The audio preprocessing module receives audio signals of two channels and adaptively adjusts an algorithm based on information that the audio signals of the two channels are from the sound zone 1 and the sound zone 2. After preprocessing the audio of the sound zone 1 and the sound zone 2, the audio preprocessing algorithm module sends preprocessed audio signals of the sound zone 1 and the sound zone 2 to the voice interaction algorithm module. The voice interaction algorithm module receives information about activation of the sound zone 1 and the sound zone 2 and preprocessed audio of the sound zone 1 and the sound zone 2, adaptively adjusts a quantity of concurrent wake-up engines and a quantity of concurrent ASR engines to 2, adaptively adjusts sound source positioning algorithm parsing audio channels to the channel 1 and the channel 2, and finally outputs a parsing result of the target sound zone for execution at the back end.

In this embodiment, the dynamic sound zone adjustment module obtains the user information of the sound zone, and determines, based on the user information, audio that is in the plurality of pieces of audio and that is input to the audio preprocessing algorithm module and the voice interaction algorithm module for processing, so that a quantity of pieces of audio that need to be processed can be reduced, to reduce computing resource occupation. This ensures normal use of the multi-sound zone voice interaction function.

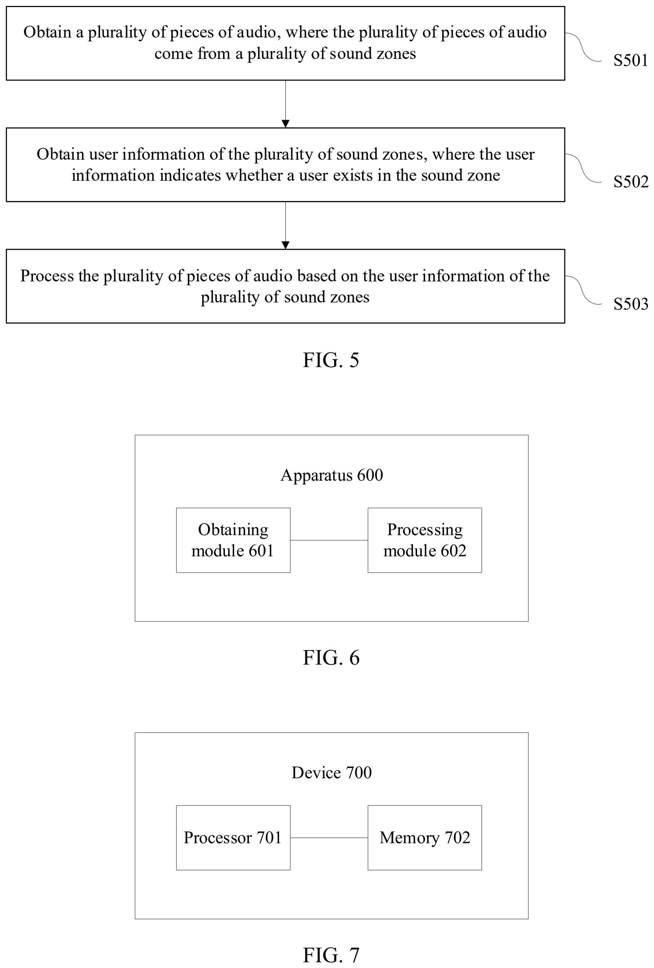

FIG. 5 is a schematic flowchart of an audio processing method according to this application. This embodiment may be executed by a transportation means (for example, a vehicle), or this embodiment may be executed by the foregoing computing platform, or this embodiment may be executed by a system that includes the computing platform and a microphone, or this embodiment may be executed by a system-on-a-chip (system-on-a-chip, SOC) in the foregoing computing platform, or this embodiment may be executed by a processor in the computing platform.

S501: Obtain a plurality of pieces of audio, where the plurality of pieces of audio come from a plurality of sound zones.

The plurality of pieces of audio are captured by microphones disposed in the plurality of sound zones, and there is a correspondence between the sound zone and the audio captured by the microphone in the sound zone.

S502: Obtain user information of the plurality of sound zones, where the user information indicates whether a user exists in the sound zone.

A main function of the microphone in the sound zone is to capture a voice of a user in the sound zone. The user is a service object of the multi-sound zone voice interaction function, and the voice made by the user is a target object for capturing and recognition. Generally, for a voice made by a same user, a signal-to-noise ratio of audio captured by a microphone in a same sound zone as the user is higher than a signal-to-noise ratio of audio captured by a microphone in a different sound zone from the user. For example, in FIG. 2a, for a voice made by a user in the sound zone 1, because a microphone in the sound zone 1 is close to the user and there is no obstacle in a propagation path of a sound, a signal-to-noise ratio of the voice of the user in audio captured by the microphone in the sound zone 1 is higher than a signal-to-noise ratio of the voice of the user in audio captured by microphones in the sound zone 2 to the sound zone 4. In addition, distances and directions of microphones in other sound zones relative to the user who makes a voice are different, and there is an obstacle such as a seat back between some sound zones and the user who makes a voice when there is no obstacle between some other sound zones and the user who makes a voice. As a result, signal-to-noise ratios captured by the microphones in different sound zones for a same voice are different. For example, in FIG. 2a, the sound zone 3 is adjacent to the sound zone 4, and there is no seat blocking. Therefore, a signal-to-noise ratio of a voice that is made by a user in the sound zone 3 and that is captured by the microphone in the sound zone 4 is likely higher than signal-to-noise ratios of the voice that is made by the user in the sound zone 3 and that is captured by the microphones in the sound zone 1 and the sound zone 2. Therefore, the user information indicating whether a user exists in a sound zone is obtained, so that audio to be processed in the plurality of pieces of audio can be determined, to ensure accuracy of voice interaction, and reduce computing resource occupation of multi-sound zone interaction. This ensures stability of voice interaction.

There are a plurality of methods for obtaining the user information of the plurality of sound zones. For example, a sensor such as a pressure sensor, a ranging sensor, a temperature sensor, or an infrared sensor may be disposed in the sound zone, and whether a user exists in a corresponding sound zone is determined based on data captured by the sensor. For another example, an image of the cabin is captured by using the camera apparatus, and a sound zone in which the user exists and a sound zone in which no user exists are determined based on the image. For another example, the sound zone of the vehicle cabin may be displayed by using a display in the vehicle, and the user selects a sound zone in which the user exists, or the user selects a sound zone in which no user exists. For another example, the sound zone of the vehicle cabin may be displayed by using a GUI interface displayed by a terminal device connected to the vehicle, and the user selects a sound zone in which the user exists, or the user selects a sound zone in which no user exists.

S503: Process the plurality of pieces of audio based on the user information of the plurality of sound zones.

In this embodiment, audio is selected from the plurality of pieces of audio based on the user information of the plurality of sound zones for processing. Specifically, an activated sound zone is determined in the plurality of sound zones based on the user information of the plurality of sound zones, and then audio of the activated sound zone is processed. In other words, a part of audio obtained through screening from the plurality of pieces of audio based on the user information of the plurality of sound zones is processed. Audio of a non-activated sound zone may be discarded, to reduce an amount of audio data that needs to be processed. This reduces occupation of computing resources and storage resources.

Three cases of processing the plurality of pieces of audio based on the user information of the plurality of sound zones mentioned above are referred to as three processing modes below.

Mode 1: Process only audio of the sound zone in which the user exists

In this mode, audio of all corresponding sound zones in which users exist is processed. The activated sound zone is the sound zone in which the user exists. For example, if a user exists in one sound zone, namely, the sound zone 1, only audio of the sound zone 1 is processed. If users exist in two sound zones, namely, the sound zone 1 and the sound zone 3, audio of the sound zone 1 and the sound zone 3 is processed. The rest may be deduced by analogy. Because a signal-to-noise ratio of a voice of a user captured by the microphone in a same sound zone as the user is high, although a quantity of pieces of audio to be processed is reduced, accuracy of speech recognition can still be ensured.

Mode 2: Process audio of the sound zone in which the user exists, and process audio of a part of the sound zone in which no user exists

In this mode, in addition to the audio of the sound zone in which the user exists, the audio of the part of the sound zone in which no user exists is further processed, so that a quantity of pieces of audio that need to be processed can be reduced, and accuracy of speech recognition can be ensured. In other words, the activated sound zone includes the sound zone in which the user exists, and may further include the sound zone in which no user exists. The sound zone in which no user exists in the activated sound zone may be a sound zone (referred to as an adjacent zone in the following) adjacent to the sound zone in which the user exists.

The adjacent zones are sound zones that are adjacent or close to each other or have few obstacles. For example, in FIG. 2a, the sound zone 1 and the sound zone 2 may be adjacent zones of each other, and the sound zone 3 and the sound zone 4 may be adjacent zones of each other. For example, in FIG. 2b, the sound zone 1 and the sound zone 2 may be adjacent zones of each other, the sound zone 3 and the sound zone 4 may be adjacent zones of each other, and the sound zone 5 and the sound zone 6 may be adjacent zones of each other. For example, when a user exists in the sound zone 1 and no user exists in the sound zone 2, audio of the sound zone 1 and the sound zone 2 may be processed; when users exist in the sound zone 1 and the sound zone 3, audio of the sound zone 1, the sound zone 2, the sound zone 3, and the sound zone 4 may be processed; and when users exist in the sound zone 1 and the sound zone 5, audio of the sound zone 1, the sound zone 2, the sound zone 5, and the sound zone 6 may be processed.

Optionally, for an important sound zone, an adjacent zone range of the important sound zone may be expanded. For example, in FIG. 2a or FIG. 2b, the sound zone 1 is the driver zone, and an adjacent zone of the sound zone 1 may include the sound zone 2 and the sound zone 3, or the adjacent zone of the sound zone 1 may include the sound zone 2, the sound zone 3, and the sound zone 4. When a user exists in the sound zone 1, audio of the sound zone 1, the sound zone 2, the sound zone 3, and the sound zone 4 may be processed. When users exist in the sound zone 1 and the sound zone 2, or users exist in the sound zone 1 and the sound zone 3, or users exist in the sound zone 1 and the sound zone 4, or users exist in the sound zone 1, the sound zone 2, and the sound zone 3, or users exist in the sound zone 1, the sound zone 2, and the sound zone 4, or users exist in the sound zone 1, the sound zone 3, and the sound zone 4, audio of the sound zone 1, the sound zone 2, the sound zone 3, and the sound zone 4 may be processed.

Audio of the adjacent zone may be added for processing when a quantity of sound zones in which users exist is less than an activated sound zone quantity threshold, to control a quantity of pieces of audio that need to be processed. If the quantity of sound zones in which users exist is greater than or equal to the activated sound zone quantity threshold, the audio of the adjacent zone is not added for processing. The activated sound zone quantity threshold is less than a total quantity of sound zones. For example, for a six-sound zone voice interaction scenario, the activated sound zone quantity threshold may be 2, 3, 4, or 5. For a four-sound zone voice interaction scenario, the activated sound zone quantity threshold may be 2 or 3. For example, in the six-sound zone voice interaction scenario, the activated sound zone quantity threshold is 4. When a quantity of sound zones in which users exist is 3, audio of one adjacent zone may be added for processing. When the quantity of sound zones in which users exist is 4 or 5, audio of the sound zone in which the user exists may be processed without adding the audio of the adjacent zone for processing.

Optionally, when the quantity of sound zones in which users exist is less than the activated sound zone quantity threshold, a quantity of activated sound zones (including the sound zone in which the user exists and a part of the sound zone in which no user exists) may be equal to the activated sound zone quantity threshold. For example, in the six-sound zone voice interaction scenario, the activated sound zone quantity threshold is 4, and when the quantity of sound zones in which users exist is 1, 2, or 3, a final quantity of activated sound zones may be 4. In this way, audio of two channels can still be reduced. During selection of the activated sound zone from the sound zone in which no user exists, first priority is given to selecting a sound zone that is directly adjacent to the sound zone in which the user exists, or selecting a sound zone that is directly adjacent to the sound zone in which the user exists and that has no obstacle, and second priority is given to selecting a sound zone that is not directly adjacent but is close to the sound zone in which the user exists. For example, in the scenario in FIG. 2b, if a user exists in the sound zone 1, in addition to the sound zone 1 used as the activated sound zone, the sound zone 2, the sound zone 3, and the sound zone 4 are further selected from the sound zone 2 to the sound zone 6 in which no user exists as the activated sound zones; or if users exist in the sound zone 1 and the sound zone 6, in addition to the sound zone 1 and the sound zone 6 that are used as the activated sound zones, the sound zone 2 directly adjacent to the sound zone 1 and the sound zone 5 directly adjacent to the sound zone 6 are further selected from the sound zone 2 to the sound zone 5 in which no user exists as the activated sound zones.

A quantity k of sound zones in which no user exists and that may be selected as the activated sound zones is obtained by subtracting a quantity of sound zones in which users exist from the activated sound zone quantity threshold. When a quantity 1 of sound zones in which no user exists and that are adjacent to the sound zone in which the user exists is greater than the quantity k of sound zones in which no user exists and that may be selected as the activated sound zones, k sound zones may be randomly selected from the 1 sound zones in which no user exists and that are adjacent to the sound zone in which the user exists. Alternatively, priorities may be set for the plurality of sound zones, and a sound zone that is adjacent to k sound zones with highest priorities in the sound zones in which users exist is selected as the activated sound zone. For example, in the six-sound zone voice interaction scenario in FIG. 2b, it is assumed that the activated sound zone quantity threshold is 4, and a priority of the sound zone 1 > a priority of the sound zone 2 > a priority of the sound zone 3 > a priority of the sound zone 4 > a priority of the sound zone 5 > a priority of the sound zone 6. If users exist in the sound zone 1, the sound zone 3, and the sound zone 5, the quantity k of sound zones in which no user exists and that may be selected as the activated sound zones is 1 (the activated sound zone quantity threshold 4 minus three sound zones in which users exist). The sound zone 2 is an adjacent zone of the sound zone 1, the sound zone 4 is an adjacent zone of the sound zone 3, and the sound zone 6 is an adjacent zone of the sound zone 5. In other words, the quantity 1 of sound zones in which no user exists and that are adjacent to the sound zone in which the user exists is 3 (the sound zone 2, the sound zone 4, and the sound zone 6), and is greater than the quantity 1 of sound zones in which no user exists and that may be selected as the activated sound zones. Therefore, in addition to the three sound zones, namely, the sound zone 1, the sound zone 3, and the sound zone 5 that are used as the activated sound zones, one sound zone may be further selected from the sound zones (the sound zone 2, the sound zone 4, and the sound zone 6) in which no user exists as the activated sound zone, and because the sound zone 1 has a highest priority, the sound zone 2 may be selected as the activated sound zone.

When the quantity 1 of sound zones in which no user exists and that are adjacent to the sound zone in which the user exists is less than or equal to the quantity k of sound zones in which no user exists and that may be selected as the activated sound zones, during selection of the activated sound zone from the sound zone in which no user exists, first priority is given to selecting a sound zone that is directly adjacent to the sound zone in which the user exists or selecting a sound zone that is directly adjacent to the sound zone in which the user exists and that has no obstacle, and second priority is given to selecting a sound zone that is not directly adjacent but is close to the sound zone in which the user exists, until k sound zones are selected from the sound zones in which no user exists as the activated sound zones.

Mode 3: Process audio of a part of the sound zone in which the user exists

The mode 3 is mainly applied to a scenario in which the computing platform (for example, the in-vehicle infotainment) has a high temperature or high load, to process the audio of the part of the sound zone in which the user exists, to further limit a quantity of pieces of audio to be processed. In this way, computing resources occupied in audio processing are reduced, to ensure normal use of the voice interaction function in the part of the sound zone when the computing platform is heavily loaded.

In a possible implementation, processing the audio of the part of the sound zone in which the user exists may be processing audio of a sound zone in which the user exists in a target sound zone. A quantity of target sound zones is less than the total quantity of sound zones. The target sound zone is the sound zone with a high importance or priority in all sound zones. When computing resources of the computing platform are insufficient, it is preferentially ensured that the audio of the sound zone in which the user exists in the target sound zone can be processed. In other words, normal use of the voice interaction function of the target sound zone is ensured.

In a specific application scenario, for example, a vehicle, the target sound zone is, for example, sound zone/zones corresponding to a driver zone and/or a front passenger zone, so that it is ensured that a voice of the driver can be preferentially responded to. For example, the target sound zone includes the sound zones corresponding to the driver zone and the front passenger zone. When it is determined, based on the user information, that users exist in the sound zones corresponding to the driver and the front passenger, audio of the sound zones corresponding to the driver and the front passenger may be processed, and even if a user exists in another sound zone, audio of the another sound zones is not processed. This reduces a quantity of pieces of audio that need to be processed as much as possible, to ensure normal use of the voice interaction function of the sound zones corresponding to the driver and the front passenger.

Certainly, the target sound zone may alternatively include only the sound zone corresponding to the driver. Alternatively, in a scenario in which the vehicle includes six sound zones, the target sound zone may include four sound zones: a driver zone, a front passenger zone, a second-row left-side zone, and a second-row right-side zone. Alternatively, division into the target sound zone may be performed in another manner, provided that a quantity of target sound zones is less than a total quantity of sound zones. Examples are not enumerated herein one by one.

In a possible implementation, processing the audio of the part of the sound zone in which the user exists may be processing the audio of at least one sound zone with a highest priority in the sound zone in which the user exists, and discarding audio of at least one of the sound zone in which the user exists with a lowest priority, to further reduce a quantity of pieces of audio that need to be processed. Specifically, audio of p sound zones with highest priorities may be selected for processing from the sound zones in which users exist, where p is an integer greater than or equal to 1, and p is less than a quantity of sound zones in which users exist, and audio of the remaining sound zone in which the user exists is discarded and not processed. Alternatively, audio of q sound zones in which users exist with lowest priorities may be discarded and not processed, where q is an integer greater than or equal to 1, and q is less than a quantity of sound zones in which users exist, and audio of the remaining sound zone in which the user exists is processed.

Optionally, in a scenario in which a temperature or load of the computing platform is high, a quantity of activated sound zones in the sound zones in which users exist may be gradually reduced. For example, one or more sound zones in which users exist with low priorities are removed from the activated sound zones each time, until the temperature or load meets a requirement. For example, in the scenario shown in FIG. 2b, it is assumed that users exist in the sound zone 1 to the sound zone 5. When a computing resource usage of the in-vehicle infotainment is greater than a threshold, one sound zone may be first reduced from the activated sound zones. For example, the sound zone 5 is first reduced, and the remaining activated sound zones are the sound zone 1 to the sound zone 4. In this case, the in-vehicle infotainment processes audio of the sound zone 1 to the sound zone 4. If the computing resource usage of the in-vehicle infotainment is still greater than the threshold, one sound zone, for example, the sound zone 3, is further reduced from the activated sound zones, and the remaining activated sound zones are the sound zone 1, the sound zone 2, and the sound zone 4. In this case, the in-vehicle infotainment processes audio of the sound zone 1, the sound zone 2, and the sound zone 4. In this case, if the computing resource usage of the in-vehicle infotainment is less than or equal to the threshold, the activated sound zones may be kept as the sound zone 1, the sound zone 2, and the sound zone 4. Certainly, when the computing resource usage of the in-vehicle infotainment is greater than the threshold, the quantity of activated sound zones may be directly reduced to a preset quantity. This is not limited herein.

If the vehicle may implement at least two of the foregoing three modes, the mode in which the user processes the audio of the plurality of sound zones may be determined in the following method. Herein, an example in which the vehicle may implement the foregoing three modes is used. In an implementation, the foregoing three modes may be selected based on the temperature and/or load of the computing platform. For example, when the computing resource usage of the computing platform is less than or equal to a first usage threshold, it may be determined that the audio of the plurality of sound zones is processed in the mode 2. When the computing resource usage of the computing platform is greater than the first usage threshold and is less than or equal to a second usage threshold, it may be determined that the audio of the plurality of sound zones is processed in the mode 1. When the computing resource usage of the computing platform is greater than the second usage threshold, it may be determined that the audio of the plurality of sound zones is processed in the mode 3. The first usage threshold is less than the second usage threshold.

Optionally, the three modes may be selected and dynamically adjusted based on the temperature or load of the computing platform. In other words, switching may be performed between the three modes, to adaptively increase or decrease a quantity of pieces of audio to be processed. In this way, accuracy of speech recognition can be ensured, and computing resource occupation of multi-sound zone voice interaction can be effectively controlled.

In another implementation, the foregoing three modes may be selected based on the load of the computing platform and the quantity of sound zones in which users exist. For example, if the load is less than or equal to a third usage threshold, and the quantity of sound zones in which users exist is less than the activated sound zone quantity threshold, it is determined that the audio of the plurality of sound zones is processed in the mode 2. If the load is less than or equal to the third usage threshold, and the quantity of sound zones in which users exist is greater than or equal to the activated sound zone quantity threshold, it is determined that the audio of the plurality of sound zones is processed in the mode 1. If the load is greater than the third usage threshold, it is determined that the audio of the plurality of sound zones is processed in the mode 3.

In another implementation, the foregoing three modes may alternatively be selected by the user. For example, the user is prompted to select one of the three modes by using the GUI interface on a center console or the terminal device of the user, and the audio of the plurality of sound zones is processed in the mode selected by the user.

Certainly, one of the three modes may alternatively be used as the mode for processing the plurality of pieces of audio by default.

In this embodiment, the user information about whether a user exists in the plurality of sound zones is obtained, and the sound zone whose audio is to be processed is determined based on the user information, so that a quantity of pieces of audio that need to be processed can be reduced. In this way, computing resource occupation is reduced, to ensure normal running of the multi-sound zone voice interaction function. In addition, the audio to be processed includes the audio of the sound zone in which the user exists, and a voice of the user in the audio has a high signal-to-noise ratio, so that accuracy of speech recognition can be ensured when a quantity of pieces of audio to be processed is reduced.

It can be understood that, in the foregoing method embodiment, a method and an operation implemented by the vehicle may alternatively be implemented by a component (for example, a chip, a circuit, or another component) in the vehicle. To implement functions in the method provided in embodiments of this application, the vehicle may include a hardware structure and/or a software unit, to implement the foregoing functions in a form of the hardware structure, the software unit, or a combination of the hardware structure and the software unit. Whether a function in the foregoing functions is performed by using the hardware structure, the software unit, or the combination of the hardware structure and the software unit depends on a specific application and design constraints of the technical solutions.

Based on a same inventive concept, this application further provides an apparatus. The apparatus may be a transportation means, an intelligent appliance, an intelligent terminal device, an internet of things device, or the like, or may be a hardware module (for example, a chip) or a functional module in a transportation means, an intelligent appliance, an intelligent terminal device, or an internet of things device.

As shown in FIG. 6, an apparatus 600 includes an obtaining module 601 and a processing module 602. The obtaining module 601 is configured to obtain a plurality of pieces of audio, where the plurality of pieces of audio come from a plurality of sound zones. The obtaining module 601 is configured to obtain user information of the plurality of sound zones, where the user information indicates whether a user exists in the sound zone. The processing module 602 is configured to process the plurality of pieces of audio based on the user information of the plurality of sound zones.

In a possible implementation, the processing module 602 is specifically configured to process a part of audio obtained through screening from the plurality of pieces of audio based on the user information of the plurality of sound zones.

In a possible implementation, the processing module 602 is specifically configured to process, based on the user information of the plurality of sound zones, audio of a sound zone in which the user exists.

In a possible implementation, the processing module 602 is specifically configured to discard, based on the user information of the plurality of sound zones, audio of a sound zone in which no user exists.

In a possible implementation, the processing module 602 is specifically configured to process, based on the user information of the plurality of sound zones, audio of a sound zone in which the user exists and audio of a part of a sound zone in which no user exists in the plurality of pieces of audio.

In a possible implementation, the obtaining module 601 is configured to obtain a computing resource usage. The processing module 602 is specifically configured to: when the computing resource usage is greater than a threshold, process, based on the user information of the plurality of sound zones, audio of a part of a sound zone in which the user exists.

In a possible implementation, the processing module 602 is specifically configured to process audio of a sound zone in which the user exists in a target sound zone, where the target sound zone is a part of the plurality of sound zones.

In a possible implementation, the plurality of sound zones are zones corresponding to a plurality of seats in a cabin of a vehicle, and the target sound zone includes a driver zone and/or a front passenger zone in the zones corresponding to the plurality of seats.

In a possible implementation, the plurality of sound zones have priorities, and the processing module 602 is specifically configured to process audio of at least one sound zone with a highest priority in the sound zone in which the user exists.

In a possible implementation, the plurality of sound zones are zones corresponding to the plurality of seats in the cabin of the vehicle, and each sound zone includes a zone corresponding to one or more seats.

As shown in FIG. 7, this application further provides a device. The device may be a transportation means, an intelligent appliance, an intelligent terminal device, an internet of things device, or the like.

The device 700 includes a processor 701 and a memory 702. The processor 701 is coupled to the memory 702. The processor 701 is configured to implement the data processing method in any one of the foregoing method embodiments based on instructions stored in the memory 702.

This application further provides a computer-readable storage medium, and the computer-readable storage medium stores a computer program. When the computer program is executed by a computer, the data processing method in any one of the foregoing method embodiments is implemented.

This application further provides a computer program product that includes instructions. When the instructions are run by an electronic device, the electronic device is enabled to perform the steps in the data processing method in any one of the foregoing method embodiments.

It may be clearly understood by a person skilled in the art that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical or another form.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, all or a part of the technical solutions of this application may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data processing method, wherein the method comprises:
obtaining a plurality of pieces of audio, wherein the plurality of pieces of audio come from a plurality of sound zones;
obtaining user information of the plurality of sound zones, wherein the user information indicates whether a user exists in the sound zone; and
processing the plurality of pieces of audio based on the user information of the plurality of sound zones.

2. The method according to claim 1, wherein processing the plurality of pieces of audio based on the user information of the plurality of sound zones comprises:
processing a part of audio obtained through screening from the plurality of pieces of audio based on the user information of the plurality of sound zones.

3. The method according to claim 1 or 2, wherein processing the plurality of pieces of audio based on the user information of the plurality of sound zones comprises:
processing, based on the user information of the plurality of sound zones, audio of a sound zone in which the user exists in the plurality of pieces of audio.

4. The method according to claim 1 or 2, wherein processing the plurality of pieces of audio based on the user information of the plurality of sound zones comprises:
discarding, based on the user information of the plurality of sound zones, audio of a sound zone in which no user exists in the plurality of pieces of audio.

5. The method according to claim 1 or 2, wherein processing the plurality of pieces of audio based on the user information of the plurality of sound zones comprises:
processing, based on the user information of the plurality of sound zones, audio of a sound zone in which the user exists and audio of a part of a sound zone in which no user exists in the plurality of pieces of audio.

6. The method according to claim 1 or 2, wherein the method further comprises:
obtaining a computing resource usage; and
when the computing resource usage is greater than a threshold, processing the plurality of pieces of audio based on the user information of the plurality of sound zones comprises:
processing, based on the user information of the plurality of sound zones, audio of a part of a sound zone in which the user exists.

7. The method according to claim 6, wherein processing the audio of the part of the sound zone in which the user exists comprises:
processing audio of a sound zone in which the user exists in a target sound zone, wherein the target sound zone is a part of the plurality of sound zones.

8. The method according to claim 7, wherein the plurality of sound zones are zones corresponding to a plurality of seats in a cabin of a vehicle, and the target sound zone comprises a driver zone and/or a front passenger zone in the zones corresponding to the plurality of seats.

9. The method according to claim 6, wherein the plurality of sound zones have priorities, and processing the audio of the part of the sound zone in which the user exists comprises:
processing audio of at least one sound zone with a highest priority in the sound zone in which the user exists.

10. An apparatus, wherein the apparatus comprises:
an obtaining module, configured to obtain a plurality of pieces of audio, wherein the plurality of pieces of audio come from a plurality of sound zones;
the obtaining module, configured to obtain user information of the plurality of sound zones, wherein the user information indicates whether a user exists in the sound zone; and
a processing module, configured to process the plurality of pieces of audio based on the user information of the plurality of sound zones.

11. The apparatus according to claim 10, wherein
the processing module is specifically configured to process a part of audio obtained through screening from the plurality of pieces of audio based on the user information of the plurality of sound zones.

12. The apparatus according to claim 10 or 11, wherein
the processing module is specifically configured to process, based on the user information of the plurality of sound zones, audio of a sound zone in which the user exists in the plurality of pieces of audio.

13. The apparatus according to claim 10 or 11, wherein
the processing module is specifically configured to discard, based on the user information of the plurality of sound zones, audio of a sound zone in which no user exists in the plurality of pieces of audio.

14. The apparatus according to claim 10 or 11, wherein
the processing module is specifically configured to process, based on the user information of the plurality of sound zones, audio of a sound zone in which the user exists and audio of a part of a sound zone in which no user exists in the plurality of pieces of audio.

15. The apparatus according to claim 10 or 11, wherein
the obtaining module is configured to obtain a computing resource usage; and
the processing module is specifically configured to: when the computing resource usage is greater than a threshold, process, based on the user information of the plurality of sound zones, audio of a part of a sound zone in which the user exists.

16. The apparatus according to claim 15, wherein
the processing module is specifically configured to process audio of a sound zone in which the user exists in a target sound zone, wherein the target sound zone is a part of the plurality of sound zones.

17. The apparatus according to claim 16, wherein the plurality of sound zones are zones corresponding to a plurality of seats in a cabin of a vehicle, and the target sound zone comprises a driver zone and/or a front passenger zone in the zones corresponding to the plurality of seats.

18. The apparatus according to claim 15, wherein the plurality of sound zones have priorities; and
the processing module is specifically configured to process audio of at least one sound zone with a highest priority in the sound zone in which the user exists.

19. A device, wherein the device comprises a processor and a memory, the processor is coupled to the memory, and the processor is configured to perform, based on instructions stored in the memory, the data processing method according to any one of claims 1 to 9.

20. A computer-readable storage medium, comprising instructions, wherein when the computer-readable storage medium is run on a computer, the computer is enabled to perform the data processing method according to any one of claims 1 to 9.

21. A computer program product comprising instructions, wherein when the instructions are run by an electronic device, the electronic device is enabled to perform the data processing method according to any one of claims 1 to 9.
